# EUROPÄISCHE PATENTANMELDUNG

(11) **EP 3 257 902 A1**
(43) Veröffentlichungstag der Anmeldung: **20.12.2017**
(21) Anmeldenummer: 16174631.8
(22) Anmeldetag: 15.06.2016
(51) Int. Cl.: C09D 5/02, C09D 7/12, C04B 26/02

(54) **BESCHICHTUNGSMASSE SOWIE PUTZBESCHICHTUNG UND DÄMMENDES BAUTEIL**

(71) Anmelder: DAW SE, 64372 Ober-Ramstadt (DE)
(72) Erfinder: HEIN, Steffen, 64846 Gross-Zimmern (DE); BRENNER, Thomas, 643676 Mühltal (DE); BEFURT, Uwe, 64372 Ober-Ramstadt (DE)
(74) Vertreter: Metten, Karl-Heinz

(57) **Zusammenfassung**

Die vorliegende Erfindung betrifft eine Beschichtungsmasse, enthaltend a) mindestens ein organisches Bindemittel auf Dispersionsbasis, b) eine Menge an Aerogel-Partikeln mit hydrophober oder hydrophobierter Oberfläche und c) Wasser sowie d) gegebenenfalls mindestens ein Additiv und/oder e) gegebenenfalls mindestens ein Brandschutzmittel. Des Weiteren betrifft die Erfindung eine Putzbeschichtung, insbesondere Wärmedämmputzbeschichtung, oder ein dämmendes Bauteil, insbesondere eine Wärmedämmplatte, erhältlich oder erhalten aus der erfindungsgemäßen Beschichtungsmasse. Außerdem betrifft die Erfindung eine Gebäudekomponente, umfassend mindestens einen mineralischen Baukörper, insbesondere ein Betonelement, mit mindestens einer beschichtbaren Fläche und auf der beschichtbaren Fläche mindestens abschnittsweise angebracht oder vorliegend mindestens eine erfindungsgemäße Putzbeschichtung und/oder ein erfindungsgemäßes dämmendes Bauteil. Schließlich betrifft die Erfindung die Verwendung der erfindungsgemäßen Beschichtungsmasse für die Herstellung von Wärmedämmputzen oder von dämmenden Bauteilen.

## Beschreibung

Die vorliegende Erfindung betrifft eine Beschichtungsmasse, enthaltend mindestens ein organisches Bindemittel auf Dispersionsbasis. Ferner betrifft die Erfindung eine Putzbeschichtung, insbesondere eine Wärmedämmputzbeschichtung, sowie ein dämmendes Bauteil, insbesondere eine Wärmedämmplatte. Außerdem betrifft die Erfindung eine Gebäudekomponente, umfassend einen mineralischen Baukörper, insbesondere ein Betonelement, mit einer darauf angebrachten oder vorliegenden erfindungsgemäßen Putzbeschichtung oder dem dämmenden Bauteil. Schließlich betrifft die Erfindung die Verwendung der erfindungsgemäßen Beschichtungsmasse für die Herstellung von Wärmedämmputzen und dämmenden Bauteilen.

Putzbeschichtungen werden schon seit sehr langer Zeit zu Verkleidung von Gebäuden oder Teilen davon, insbesondere von Außenfassaden verwendet. Derartige Putzbeschichtungen übernehmen dabei ästhetische wie auch technische Funktionen und führen zum Beispiel zu einer Vergleichmäßigung der Oberfläche einer Fassade.

Aus Gründen der Ressourcenschonung spielt die Wärmedämmung von Gebäuden sowohl bei der Neuherstellung wie auch bei der Sanierung eine immer größere Rolle. Insbesondere bei der Instandsetzung von Gebäuden kann sich der Einbau geeigneter Wärmedämmmaßnahmen beispielsweise aufgrund regulatorischer Vorgaben mitunter als schwierig erweisen (zum Beispiel bei denkmalgeschützten Gebäuden). So kann es vorkommen, dass man für bestimmte Anwendungen nicht auf den Einsatz geschäumter Dämmplatten aus Styrolpolymerisatpartikeln als der häufig zweckmäßigsten Dämmvariante zurückgreifen kann, beispielsweise wegen Platzbedarfs oder einem unverhältnismäßig hohem Aufwand an Schneidarbeiten. Es hat demnach nicht an Versuchen gefehlt, alternative Wärmedämmungen verfügbar zu machen, die vom Fachmann wie auch vom Endverbraucher akzeptiert werden.

Hierbei sind bislang vielfältigste Dämmmaterialien und Dämmsysteme getestet worden. Exemplarisch seien in diesem Zusammenhang sogenannte Leichtfüllstoffe genannt.

So wird in der DE 102 11 331 A1 abgestellt auf eine maschinell applizierbare aerogelhaltige Schall-/Wärmedämmung, bei der der Anteil an Aerogel-Partikeln im Bereich von 5 bis 97 Vol.-% und die Größe der Partikel im Bereich von 250 µm bis 10 mm liegen sollen. Eine einfachere Handhabung des Fördergutes soll hierbei dadurch gelingen, dass man das Aerogel im trockenen Zustand fördert und erst kurz vor der eigentlichen Applikation mit dem Bindemittel, einem physikalisch härtenden Einkomponenten-Klebstoff, einem chemisch härtenden Einkomponenten-Klebstoff oder einem chemisch härtenden Zwei- bzw. Mehrkomponenten-Klebstoff, vermischt. Die Handhabung der Klebstoffe als Bindemittel kann sich mitunter problematisch gestalten und bedarf der besonderen Sorgfalt. Auch scheidet eine manuelle Anbringung aus, insbesondere wenn man zu Wärmedämmbeschichtungen mit einem homogenen Wärmedämmprofil gelangen möchte.

Aus der EP 2 871 169 A1 geht eine spritz- bzw. spachtelfähige Dispersionsmasse hervor, umfassend Polymerschaumkugeln, einen Leichtfüllstoff, ein Fasermaterial in Form von Schnittfasern, ein organisches Bindemittel und Wasser. Als geeignete Polymerschaumpartikel kommen hierbei z.B. solche aus geschäumtem Polyethylen, geschäumtem Polypropylen oder expandiertem Polystyrol mit einem mittleren Partikeldurchmesser (d50-Wert) im Bereich von 0,3 mm bis 2,5 mm zum Einsatz. Mithilfe dieser Beschichtungsmassen sollen Putzbeschichtungen zugänglich sein, die schon bei Schichtdicken im Bereich von 1 bis 3 mm sehr stoß- bzw. schlagfest sind, die sich gleichwohl gut und zuverlässig verarbeiten lassen, die nicht zur Rissbildung neigen und die einen Beitrag zu einer Wärmedämmung liefern.

Die aus dem Stand der Technik bekannten alternativen Dämmvarianten lassen noch stets Wünsche offen. Der vorliegenden Erfindung lag daher die Aufgabe zu Grunde, eine Wärmedämmung zur Verfügung zu stellen, die nicht mit den Nachteilen des Stands der Technik behaftet ist. Ferner lag der Erfindung die Aufgabe zu Grunde, eine Dämmvariante verfügbar zu machen, die insbesondere auch in kleineren Schichtdicken als bei bei konventioneller Dämmung eine hinreichende Wärmedämmung liefert. Ferner lag der Erfindung die Aufgabe zu Grunde, Dämmvarianten zur Verfügung zu stellen, die sehr gut und dauerhaft an einer Gebäudewand haften. Schließlich lag der Erfindung die Aufgabe zu Grunde, eine Dämmvariante zur Verfügung zu stellen, die bei guter Dämmung gleichwohl einen guten Brandschutz gewährleistet.

Demgemäß wurde eine Beschichtungsmasse gefunden, enthaltend a) mindestens ein organisches Bindemittel auf Dispersionsbasis, b) eine Menge an Aerogel-Partikeln mit hydrophober oder hydrophobierter Oberfläche und c) Wasser sowie d) gegebenenfalls mindestens ein Additiv und/oder e) gegebenenfalls mindestens ein Brandschutzmittel.

Aerogele im Sinne der vorliegenden Erfindung können durch Trocknung aus geeigneten Gelen erhalten werden. Als geeignete anorganische Aerogele kommen zum Beispiel SiO₂-, AI₂O₃-, TiO₃-, ZrO₂-, SnO₂-, Li₂O-, CeO₂- und V₂O₅-Aerogele sowie Mischungen dieser Aerogele in Betracht, Darüber hinaus kann auch auf organische Aerogele zurückgegriffen werden, beispielsweise auf solche auf der Basis von Resorcin/Formaldehyd, Melamin/Formaldehyd oder Resorcin/Furfural oder auf solche aus Polyisocyanaten oder Polyurethanen. Anorganische Aerogele sind für die erfindungsgemäßen Beschichtungszusammensetzungen jedoch bevorzugt. SiO₂-Aerogel können zum Beispiel durch saure Hydrolyse und Kondensation von Tetraethylorthosilikat in Ethanol hergestellt werden. Das im Verlauf des Herstellerprozesses entstehende Gel wird dabei unter überkritischen Bedingungen getrocknet. Indem man das erhaltene Gel vor der eigentlichen Trocknung mit einem chlorhaltigen Silylierungsmittel umsetzt, gelangt man zu Aerogelen mit hydrophober Oberfläche. Als geeignete Silylierungsmittel kommen zum Beispiel Methylchlorsilane (Me₄₋ₙSiClₙ mit n = 1 bis 3) in Betracht. Alternativ können Aerogele mit hydrophober Oberfläche durch Behandlung eines Lyogels mit einem organischen Lösungsmittel und anschließender Silylierung der Oberflächen mit einem Disiloxan als Silylierungsmittel, vorzugsweise mit Hexamethyldisiloxan, gewonnen werden, wie in der WO 1998/023367 A2 beschrieben.

Die in den erfindungsgemäßen Beschichtungsmassen zum Einsatz kommenden Aerogel-Partikel verfügen regelmäßig über eine Dichte kleiner 400 kg/m³, vorzugsweise kleiner oder gleich 250 kg/m³ und besonders bevorzugt im Bereich von 115 bis 185 kg/m³. Darüber hinaus wird in einer zweckmäßigen Ausgestaltung auf solche Aerogel-Partikel zurückgegriffen, die über eine Schüttdichte, bestimmt nach nach DIN ISO 697 und EN ISO 60, kleiner oder gleich 150 kg/m³, bevorzugt im Bereich von 60 bis 130 kg/m³ und besonders bevorzugt im Bereich von 65 bis 115 kg/m³, verfügen. Geeignete Aerogele im Sinne der vorliegenden Erfindung umfassen zweckmäßigerweise solche mit Porositäten von 55 % und darüber, bevorzugt von 75 % und darüber sowie besonders bevorzugt von 90 % und darüber, bestimmt gemäß DIN EN 1936:2007-02. Die erfindungsgemäß verwendeten zu verwendenden Aerogel-Partikel mit hydrophober Oberfläche weisen im Allgemeinen eine durchschnittliche Porengröße im Bereich von 10 bis 100 nm auf. Hierbei kommen insbesondere auch solche Aerogel-Partikel mit hydrophober Oberfläche zum Einsatz, die eine spezifische Oberfläche. im Bereich von 200 bis 2000 m²/g, vorzugsweise im Bereich von 400 bis 1000 m²/g, bestimmt gemäß DIN ISO 9277:2014-01, besitzen. Neben den Aerogel-Partikeln mit hydrophober Oberfläche können auch Aerogel-Partikel mit hydrophiler Oberfläche mitverwendet werden, insbesondere solche, die die vorangehend genannten Spezifikationen erfüllen. Die Mitverwendung solcher Aerogel-Partikel mit hydrophiler Oberfläche ist jedoch nicht zwingend erforderlich für die Lösung der der Erfindung zugrunde liegenden Aufgabe.

Als besonders vorteilhaft hat sich erwiesen, für die erfindungsgemäßen Beschichtungsmassen auf Aerogel-Partikel mit hydrophobierter Oberfläche zurückzugreifen, die über eine Partikelgröße D50 größer oder gleich 0,1 mm, vorzugsweise im Bereich von 0,2 mm bis 5 mm und besonders bevorzugt im Bereich von 0,2 bis 4 mm und/oder eine Partikelgröße D10 größer oder gleich 0,05 mm, vorzugsweise im Bereich von 0,075 mm bis 1 mm und besonders bevorzugt im Bereich von 0,1 bis 0,75 mm und/oder eine Partikelgröße D90 kleiner oder gleich 10 mm, vorzugsweise im Bereich von 0,4 mm bis 7 mm und besonders bevorzugt im Bereich von 0,5 bis 5 mm verfügen. Besonders bevorzugt sind hierbei solche Beschichtungsmasse, bei denen Aerogel-Partikel mit hydrophober Oberfläche zum Einsatz kommen, die über eine Partikelgröße D50 größer oder gleich 0,1 mm, vorzugsweise im Bereich von 0,2 mm bis 5 mm und besonders bevorzugt im Bereich von 0,2 bis 4 mm, und eine Partikelgröße D10 größer oder gleich 0,05 mm, vorzugsweise im Bereich von 0,075 mm bis 1 mm und besonders bevorzugt im Bereich von 0,1 bis 0,75 mm, und eine Partikelgröße D90 kleiner oder gleich 10 mm, vorzugsweise im Bereich von 0,4 mm bis 7 mm und besonders bevorzugt im Bereich von 0,5 bis 5 mm verfügen. Der D50-Wert beschreibt dabei die mittlere Partikelgröße und bedeutet, dass 50% der Partikel kleiner sind als der angegebene Wert. In entsprechender Weise bedeuten der D90-Wert, dass 90% der Partikel kleiner sind als der angegebene Wert, und der D10-Wert, dass 10 % der Partikel kleiner sind als der angegebene Wert. In einer ganz besonders bevorzugten Ausführungsform liegen mindestens 90 Gewichtsprozent, vorzugsweise sämtliche der Aerogel-Partikel mit hydrophober oder hydrophobierter Oberfläche im Bereich von 1,2 bis 4,5 mm, vorzugsweise im Bereich von 1,4 bis 4 mm vor.

Bevorzugt werden solche Aerogel-Partikel mit hydrophober oder hydrophobierter Oberfläche mit möglichst großer Partikelgröße in die erfindungsgemäßen Beschichtungsmasse eingearbeitet. Auf diese Weise gelingt es regelmäßig, erfindungsgemäße Beschichtungsmasse mit möglichst großen Mengen an solchen Aerogel-Partikeln zu erhalten. So sind in einer besonders geeigneten Ausführungsvariante in den erfindungsgemäßen Beschichtungsmassen mindestens 5 Gew.-%, vorzugsweise mindestens 9 Gew.-% und besonders bevorzugt mindestens 11 Gew.-% sowie ganz besonders bevorzugt im Bereich von 12 bis 17 Gew.-% an den Aerogel-Partikeln mit hydrophober oder hydrophobierter Oberfläche, jeweils bezogen auf das Gesamtgewicht der Beschichtungsmasse, enthalten. Die erfindungsgemäßen Beschichtungsmassen zeichnen sich demnach überraschenderweise dadurch aus, dass sich die Aerogel-Partikel selbst in relativ großen Mengen einarbeiten und dispergieren lassen und ein lagerstabiles System bilden.

Für viele Anwendungen hat es sich als zweckmäßig erwiesen, auf solche erfindungsgemäßen Beschichtungsmassen zurückzugreifen, die ferner enthalten f) mindestens einen Leichtfüllstoff, insbesondere mineralischen Leichtfüllstoff, der kein Aerogel-Partikel mit hydrophober oder hydrophobierter Oberfläche ist, und/oder g) mindestens einen Füllstoff, der kein Leichtfüllstoff und kein Aerogel-Partikel mit hydrophober oder hydrophobierter Oberfläche ist, und/oder h) mindestens ein Fasermaterial, insbesondere Schnittfasermaterial. Hierbei sind solche Beschichtungsmassen bevorzugt, die den mindestens einen Leichtfüllstoff, insbesondere mineralischen Leichtfüllstoff, und das mindestens eine Fasermaterial, insbesondere Schnittfasermaterial, sowie gegebenenfalls den Füllstoff, der kein Leichtfüllstoff und kein Aerogel-Partikel mit hydrophober oder hydrophobierter Oberfläche ist, enthalten.

Hierbei können die genannten Leichtfüllstoffe insbesondere ausgewählt sein aus der Gruppe bestehend aus Glasbubbles, Blähglas, z.B. Blähglasgranulat; geblähten vulkanischen Gesteinen, insbesondere Perlite; expandierten Perliten; Blähton; Blähschiefer, Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten; Korkpartikeln, sphärischen EPS-Partikeln und beliebigen Mischungen der genannten zusätzlichen Leichtfüllstoffe. Bevorzugt werden in der erfindungsgemäßen Beschichtungsmasse bzw. im erfindungsgemäßen Bauteil anorganische Leichtfüllstoffe oder Mischungen anorganischer Leichtfüllstoffe eingesetzt. Ganz besonders bevorzugt greift man auf die Leichtfüllstoffe mit einer Dichte kleiner oder gleich 600 g/l, insbesondere kleiner oder gleich 500 g/l, sowie besonders bevorzugt im Bereich von 50 bis 500 g/l, zurück. Ferner sind unter diesen Leichtfüllstoffen solche besonders geeignet, die über einen gemittelten Partikeldurchmesser (d50-Wert) im Bereich von 1 µm bis 500 µm, bevorzugt im Bereich von 5 µm bis 300 µm und besonders bevorzugt im Bereich von 10 µm bis 200 µm verfügen. Indem man zusätzlich die genannten Leichtfüllstoffe in die erfindungsgemäße Beschichtungsmasse einarbeitet, wird diese beim Aufrühren nochmals voluminöser.

Die erfindungsgemäße Beschichtungsmasse eignet sich dabei als Spachtelmasse ebenso wie als Spritzmasse, insbesondere Spritzspachtelmasse, d.h. ein und dieselbe erfindungsgemäße Beschichtungsmasse kann sowohl mittels Spitztechnik, als auch manuell verarbeitet bzw. aufgetragen werden.

Unter den genannten Füllstoffen wird bevorzugt zurückgegriffen auf solche, die ausgewählt sind aus der Gruppe bestehend aus Kaolin, Calciumcarbonat, Dolomit, Ton, Kreide, Talkum, Glimmer, Quarzmehl, Quarzsand und beliebigen Mischungen der genannten Füllstoffe.

Die vorangehend genannten Leichtfüllstoffe wie auch die vorangehend genannten Füllstoffe tragen zu aus den erfindungsgemäßen Beschichtungsmassen erhaltenen Beschichtungen bei, die sich durch eine größere mechanische Stabilität auszeichnen. Dies trifft insbesondere auch auf solche Beschichtungsmassen zu, bei denen vorgesehen ist, dass der Leichtfüllstoff und/oder der Füllstoff, insbesondere der Leichtfüllstoff und der Füllstoff, einen D50-Wert und/oder einen D90-Wert, insbesondere einen D50-Wert und einen D90-Wert, aufweisen, der kleiner ist als der D50-Wert bzw. der D90-Wert der Aerogel-Partikel mit hydrophober oder hydrophobierter Oberfläche. Auf diese Weise gelangt man zu durch Leichtfüllstoffe und/oder Füllstoffe stabilisierten Aerogel-Partikeln.

Für die erfindungsgemäßen Beschichtungsmassen kann ferner vorgesehen sein, dass das organische Bindemittel auf Dispersionsbasis mindestens ein Copolymer auf Basis von Vinylacetat und Ethylen, insbesondere ein Vinylacetat/Ethylen-Copolymer, mindestens ein Copolymer auf Basis von Vinylaromaten, insbesondere Styrolacrylat-Copolymere, mindestens ein Copolymer auf Basis von Reinacrylaten, mindestens ein Polyurethan, mindestens ein Silikon, mindestens ein Hybridpolymer auf Basis von amorphem Siliciumdioxid, insbesondere auf der Basis von amorphem Siliciumdiaxid und mindestens einem Homo- oder Copolymeren aus Acrylaten und/oder Methacrylaten, oder eine Mischung der genannten Verbindungen enthält oder hieraus als Hauptfeststoffbestandteil gebildet ist. Hierbei sind Copolymere auf Basis von Vinylacetat und Ethylen, insbesondere Vinylacetat/EthylenCopolymere, Styrolacrylat-Copolymere und/oder Copolymere auf Basis von Reinacrylaten besonders bevorzugt. Grundsätzlich handelt es sich bei den organischen Bindemitteln auf Dispersionsbasis um wässrige Dispersionen, d.h. das organische Bindemittel liegt dispergiert in einem wässrigen System bzw. Wasser vor.

Die erfindungsgemäße Beschichtungsmasse kann neben dem organischen Bindemittel auf Dispersionsbasis ebenfalls anorganische Bindemittel enthalten, beispielsweise Wasserglas und/oder Kieselsol. Bevorzugt sind solche erfindungsgemäßen Beschichtungsmassen, die neben dem mindestens einen organischen Bindemittel auf Dispersionsbasis keine anorganischen Bindemittel enthalten.

Geeignete Additive für die erfindungsgemäßen Beschichtungsmassen können ferner ausgewählt werden aus der Gruppe bestehend aus Verdickern, Netzmitteln, Dispergiermitteln, Entschäumungsmitteln, Hydrophobierungsmitteln, Konservierungsmitteln und deren beliebigen Mischungen. Unter den Hydrophobierungsmitteln (Komponente d1)) sind dabei Oleate und Stearate, insbesondere Li-Stearat, bevorzugt. Selbstverständlich können auch beliebige Mischungen der genannten Verbindungen eingesetzt werden. Mithilfe des Zusatzes an Hydrophobierungsmittel, insbesondere an Lithium-Stearat, gelangt man zu besonders schaumigen, porenreichen Beschichtungsmassen. Des Weiteren können besonders geeignete Entschäumungsmittel (Komponente d2)) ausgewählt werden aus der Gruppe bestehend aus Ethylen- und Propylenoxid, Alkyldiglykoläther-Natriumsalz, Natriumlaurylsulphaten, nichtionischen Tenside und deren Mischungen. In einer besonders zweckmäßigen Ausgestaltung stellt das Entschäumungsmittel ein Fettalkoholethoxylat dar.

Geeignete Brandschutzmittel können des Weiteren ausgewählt werden aus der Gruppe bestehend aus Phosphaten, Al(OH)₃ und deren Mischungen.

In einer besonders zweckmäßigen Ausgestaltung kann vorgesehen sein, dass die erfindungsgemäße Beschichtungsmasse umfasst bzw. gebildet ist aus
1 bis 20 Gew.-%, bevorzugt 1 bis 15 Gew.-%, besonders bevorzugt 2 bis 12 Gew.-% an dem mindestens einen organischen Bindemittel (Feststoffanteil),
1 bis 20 Gew.-%, vorzugsweise 8 bis 18 Gew.-% und besonders bevorzugt 10 bis 17,5 Gew.-% an Aerogel-Partikeln mit hydrophobierter Oberfläche,
10 bis 75 Gew.-%, bevorzugt 30 bis 70 Gew.-% und besonders bevorzugt 40 bis 65 Gew.-%, Wasser,
0 bis 5 Gew.-%, bevorzugt 0,2 bis 4 Gew.-% und besonders bevorzugt 1 bis 3 Gew.-%. an dem mindestens einen Additiv,
0 bis 10 Gew.-%, vorzugsweise 1 bis 8 Gew.-% und besonders bevorzugt 2 bis 7 Gew.-%, an dem mindestens einen Brandschutzmittel,
0 bis 30 Gew.-%, vorzugsweise 0,1 bis 25 Gew.-% und besonders bevorzugt 1 bis 15 Gew.-% an dem mindestens einen Leichtfüllstoff, der kein Aerogel-Partikel mit hydrophobierter Oberfläche ist,
0 bis 40 Gew.-%, bevorzugt 5 bis 30 Gew.-% und besonders bevorzugt 10 bis 25 Gew.-%, an dem mindestens einen Füllstoff, der kein Leichtfüllstoff und kein Aerogel-Partikel mit hydrophobierter Oberfläche ist, und
0 bis 5 Gew.-%, bevorzugt 0,1 bis 4 Gew.-% und besonders bevorzugt 0,5 bis 3 Gew.-%, an dem mindestens einen Fasermaterial,
wobei die die Beschichtungsmasse bildenden Komponenten stets 100 Gew.-% ergeben.

Geeignete erfindungsgemäße Beschichtungsmassen zeichnen sich auch durch eine sehr geringe Dichte aus, beispielsweise kleiner oder gleich 0,60 g/ml, bevorzugt kleiner 0,50 g/ml und besonders bevorzugt kleiner oder gleich 0,40 g/ml.

Die erfindungsgemäßen Beschichtungsmassen liegen vorzugsweise als gebrauchsfertige pastöse Beschichtungsmassen vor.

Die der Erfindung zugrunde liegende Aufgabe wird des Weiteren gelöst durch eine Putzbeschichtung, insbesondere Wärmedämmputzbeschichtung, oder ein dämmendes Bauteil, insbesondere eine Wärmedämmplatte, erhältlich oder erhalten aus einer erfindungsgemäßen Beschichtungsmasse.

Aus den erfindungsgemäßen Beschichtungsmassen sind insbesondere auch solche Putzbeschichtungen zugänglich. die über eine Haftzugfestigkeit gemäß DIN EN 13494:2002 im Bereich von 1 bis 160 kPa (DIN 13494), bevorzugt im Bereich von 20 bis 100 kPa und besonders bevorzugt im Bereich von 30 bis 60 kPa, und/oder über eine Querhaftzugfestigkeit im Bereich von 4 bis 40 kPa, bevorzugt im Bereich von 20 bis 40 kPa und besonders bevorzugt im Bereich von 30 bis 40 kPa, verfügen.

Von besonderem Vorteil ist auch, dass sich mit den erfindungsgemäßen Beschichtungsmassen solche Beschichtungen erhalten lassen, die sich durch eine sehr wirksame Wärmedämmung auszeichnen und die über eine Wärmeleitzahl λ gemäß DIN EN 12667:2001-05 kleiner 0,040, bevorzugt im Bereich von 0,021 bis 0,030 W/mK, und besonders bevorzugt im Bereich von 0,023 bis 0,028 W/mK, verfügen. Mit den erfindungsgemäßen Beschichtungsmassen sind dabei auch solche Beschichtungen zugänglich, die einen Wärmedurchgangswiderstand (bei 10°C) R₁₀ gemäß DIN EN 12667:2001-05 größer oder gleich 0,5 m²_{*}K/W, bevorzugt größer oder gleich 0,8 m²_{*}K/W und besonders bevorzugt größer oder gleich 1,0 m²_{*}K/W aufweisen.

Die Anwendungsbreite der erfindungsgemäßen Beschichtungsmassen wird auch dadurch erhöht, dass sich mit diesen solche Beschichtungen erhalten lassen, die gemäß DIN EN 13501:2010-01 mindestens eine Klassifizierung in die Brandklasse C ermöglichen, ermittelt nach dem Prüfverfahren gemäß EN 13823:2010-12. Dieses Ergebnis ist angesichts des Umstands, dass die erfindungsgemäßen Beschichtungszusammensetzungen auf einem organischen Bindemittel basieren, als überraschend zu werten.

Schließlich zeichnen sich die erfindungsgemäßen Beschichtungen und die erfindungsgemä-βen dämmenden Bauteile auch durch eine sehr geringe Dichte aus, beispielsweise kleiner oder gleich 200 kg/m³, bevorzugt kleiner oder gleich 175 g/m³ und besonders kleiner oder gleich 150 g/m³. Bei den erfindungsgemäßen Beschichtungen handelt es sich um getrocknete Beschichtungen.

Außerdem wird die der Erfindung zugrunde liegende Aufgabe gelöst durch eine Gebäudekomponente, umfassend mindestens einen mineralischen Baukörper, insbesondere ein Betonelement, mit mindestens einer beschichtbaren Fläche, insbesondere ausgewählt aus der Gruppe bestehend aus Wand, insbesondere Betonwand, Decke, insbesondere Betondecke, Sockel, insbesondere Betonsockel, und Boden, insbesondere Betonboden, und auf der beschichtbaren Fläche mindestens abschnittsweise, insbesondere unmittelbar, angebracht oder vorliegend mindestens eine erfindungsgemäße Putzbeschichtung und/oder mindestens ein erfindungsgemäßes dämmendes Bauteil.

Hierbei sind solche Gebäudekomponenten bevorzugt, die ferner auf der Putzbeschichtung oder dem dämmenden Bauteil angebracht oder vorliegend, und zwar abgewandt von dem mineralischen Baukörper, insbesondere dem Betonelement, mindestens eine elektrisch beheizbare oder beheizte Beschichtung umfassen. In diesen elektrisch beheizbaren oder beheizten Beschichtungen sind zum Beispiel metallische Widerstandsdrähte, wie Kupferdrähte, silberbeschichtete Füllstoffe, Leitruß, Carbonfasern, Carbongewebe und/oder Carbonvliese, insbesondere Carbonfasern, enthalten. Exemplarisch sei auch eine Carbonfaserbeschichtung genannt. Außerdem sind auch solche Gebäudekomponenten mit umfasst, bei der auf der Putzbeschichtung oder dem dämmenden Bauteil mindestens ein Oberputz und/oder mindestens eine Farbbeschichtung vorliegen.

Die der Erfindung zu Grunde liegende Aufgabe wird des weiteren gelöst durch einen Wandaufbau umfassend, in dieser Reihenfolge, mindestens einen mineralischen Baukörper mit mindestens einer beschichtbaren Fläche, insbesondere ausgewählt aus der Gruppe bestehend aus Wand, Decke, Sockel und Boden, gegebenenfalls mindestens eine Grundierung, mindestens eine erfindungsgemäße Putzbeschichtung und/oder mindestens ein erfindungsgemäßes Bauteil, mindestens eine elektrisch beheizbare oder beheizte Beschichtung, insbesondere enthaltend silberbeschichtete Füllstoffe, Leitruß, Carbonfasern, Carbongewebe, Carbonvliese und/oder eine Carbonfaserbeschichtung, und/oder mindestens ein elektrisch beheizbares oder beheiztes Heizelement, insbesondere elektrisch leitende Widerstandsdrähte, beispielsweise Kupferdrähte, gegebenenfalls mindestens einen Oberputz und/oder gegebenenfalls mindestens eine Farbbeschichtung. Der mineralischen Baukörper, insbesondere die Wand, können Beton, Carbonbeton, Porenbeton, Gips und dergleichen umfassen oder hieraus gebildet sein.

Als besonders zweckmäßig haben sich auch solche erfindungsgemäßen Gebäudekomponenten erwiesen, die ferner ausgestattet sind mit einem Gebäudeelement mit einer beschichtbaren Fläche und mit einer Wärmeleitfähigkeit, die geringer ist als die Wänneleitfähigkeit des mineralischen Baukörpers, insbesondere des Betonelements. Hierbei können diese mineralischen Baukörper, insbesondere diese Betonelemente, vorzugsweise ausgewählt sein aus der Gruppe bestehend aus Gipskartonwänden, Kalksandsteinwänden, Tonziegelwänden und dergleichen. Auf der beschichtbaren Fläche des mineralischen Baukörpers, insbesondere des Betonelements, und der beschichtbaren Fläche des Gebäudeelements liegen hierbei geeigneter Weise jeweils mindestens abschnittsweise mindestens eine erfindungsgemäße Putzbeschichtung oder mindestens ein erfindungsgemäßes dämmendes Bauteil vor oder sind hieran angebracht.

In einer weiteren vorteilhaften Ausführungsform der erfindungsgemäßen Gebäudekomponente ist vorgesehen, dass das Gebäudeelement und der mineralische Baukörper, insbesondere das Betonelement, mindestens abschnittsweise aneinander anliegen oder mindestens abschnittsweise über mindestens eine erfindungsgemäße Putzbeschichtung miteinander verbunden sind.

Hierbei sind auch solche erfindungsgemäßen Gebäudekomponenten bevorzugt, bei denen der mineralische Baukörper, insbesondere das Betonelement, Carbonbeton und/oder mindestens ein Carbonvlies umfasst oder hieraus besteht.

Die erfindungsgemäßen Beschichtungsmassen eignen sich insbesondere auch für die Herstellung von Wärmedämmputzen und von dämmenden Bauteilen.

Mit den erfindungsgemäßen Beschichtungsmassen kann bereits über die damit erhaltenen Putzbeschichtungen selber eine wirksame Schall- und auch Wärmedämmung hergestellt werden. Diese Beschichtungsmasse kann einfach und schnell aufgetragen werden und erlaubt eine sehr flexible Handhabung direkt an der Baustelle. Des Weiteren zeichnet sich die erfindungsgemäße Beschichtungsmasse auch dadurch aus, dass sie sowohl manuell wie auch maschinell, beispielsweise mittels geeigneter Spritztechniken, aufgetragen werden kann. Bei der maschinellen Auftragung gelingt überdies über die Einstellung der Sprühstärke die Dosierung. Somit ist eine stets bedarfsgerechte Schichtdicke für jeden Untergrund auftragbar. Von besonderem Vorteil ist auch, dass selbst komplexe Objektgeometrien kein Hindernis für eine flächendeckende, gleichbleibende Auftragung darstellen. Beispielsweise kann die erfindungsgemäße Beschichtungsmasse ohne weiteres auch auf Rundungen aufgebracht werden. Mithin liefert die erfindungsgemäße Beschichtungsmasse eine leicht und zuverlässig formbare Dämmung. Ein weiteres Anwendungsfeld für die erfindungsgemäßen Beschichtungsmassen ist die Ummantelung von Installationsrohren, beispielsweise Heizungsrohren. Indem sich mit den erfindungsgemäßen Beschichtungsmassen eine gewünschte pastöse Konsistenz herstellen lässt, können beliebige Bauteilanschlüsse sicher abgedichtet bzw. schall- und wärmegedämmt werden. Dies betrifft Tür- und Fensterrahmen bzw.laibungen ebenso wie Rollladenkästen am Übergang zu den Außenwänden. Von besonderem Vorteil ist ebenfalls, dass die erfindungsgemäßen Putzbeschichtungen im abgetrockneten Zustand bereits bei Dicken im Bereich von 1 bis 3 mm oder 1 bis 5 mm, vorzugsweise im Bereich von 5 bis 10 mm und insbesondere auch im Bereich von 10 bis 40 mm hervorragende Wärmedämmwerte liefern. Möchte man Beschichtungen oder Dämmplatten aus den erfindungsgemäßen Beschichtungsmasse erhalten mit einer Dicke im Bereich von 10 mm oder darüber, insbesondere im Bereich von 15 mm oder darüber, hat es sich als vorteilhaft erwiesen, diese in separaten Schritten im Wege eines zweischichtigen Auftrags zu erhalten. Als weiterer Vorteil hat sich erwiesen, dass die erfindungsgemäße Beschichtungsmasse auch ohne die Anbringung einer Grundierung sehr gut auf den zu beschichtenden Untergründen haftet und damit nahezu auf allen Untergründen aufgetragen werden kann. Hierzu trägt unter anderem auch bei, dass die erfindungsgemäßen Putzbeschichtungen sich bei Dehnungsbelastungen und/oder Temperaturschwankungen sehr flexibel verhalten.

Nachfolgend wird die erfindungsgemäße Beschichtungsmasse anhand eines Beispiels dargestellt, ohne dass hierdurch die allgemeine Aussage der zugrunde liegenden technischen Lehre in irgendeiner Weise eingeschränkt werden soll.

### Beispiele:

Die die erfindungsgemäße wie auch die nicht-erfindungsgemäßen Beschichtungsmassen bildenden Komponenten wurden auf für den Fachmann bekannte Weise zusammen gegeben und dispergiert. Diese Beschichtungsmassen hatten die der nachfolgenden Tabelle zu entnehmende Zusammensetzung:

| | **Erfindg.** | | **Vgl.** 1 | | **Vgl. 2** | |
|---|---|---|---|---|---|---|
| | Gew.-% | Vol.-% | Gew.-% | Vol.-% | Gew.-% | Vol.-% |
| Wasser | 57,0 | 18,91 | 39,05 | 18,85 | 56,13 | 18,79 |
| Additive ¹⁾ (80%-ig) | 2,0 | 1,57 | 1,36 | 1,57 | 2,03 | 1,57 |
| Flammschutzmittel | 5,0 | 0,87 | 3,42 | 0,87 | 4,93 | 0,87 |
| Glasfaser | 1,0 | 0,13 | 0,68 | 0,13 | 0,99 | 0,13 |
| wässr. Styrolacrylat-Dispersion (50%) | 20,0 | 6,44 | 13,69 | 6,42 | 19,72 | 6,4 |
| Aerogel-Partikel (hydrophobiert) | 15,0 | 72,08 | 0 | 0 | 0 | 0 |
| Blähglas-Granulat | 0 | 0 | 41,8 | 72,16 | 0 | 0 |
| Perlite (hydrophobiert) | 0 | 0 | 0 | 0 | 16,20 | 72,24 |
| Dichte (g/ml) | 0,385 | | 0,64 | | 0,68 | |
| Feststoffanteil | 32,62 | | 53,83 | | 33,76 | |

| | | | | | | |
|---|---|---|---|---|---|---|
| 1) Additive: Verdicker (Celluloseether, Polysaccharid-Verdicker, synthetisches Schichtsilikat), Neutralisationsnmittel (KOH, 20%-ig), Netzmittel (25%-ig), Entschäumer, Hydrophobierungsmittel (Li-Stearat), Konservierungsmittel (5%-ig) | | | | | | |

Aus den vorangehend genannten Beschichtungsmassen wurden Dämmplatten mit den Ma-βen 500 mm x 500 mm x 30 mm hergestellt. Zur Bestimmung des Wärmedurchlasswiderstandes, der Wärmeleitfähigkeit und der Dichte wurden die Dämmplatten den folgenden zwei Konditionierungsmethoden unterworfen:
A) Der Prüfkörper wurde vor der Prüfung bei 50°C bis zur Massekonstanz in einem Labortrockenschrank mit Umluft getrocknet und anschließend mit einer dünnen, dampfdichten PVC-Folie zur Vermeidung konvektionsbedingter Feuchtezunahme umhüllt.
B) Der Prüfkörper wurde bis zum Erreichen der Massekonstanz in Normklima gemäß DIN EN 23270:1991-09 bei 23 ± 2°C und 50 ± 5 % relativer Feuchte gelagert. Anschließend wurden der Prüfkörper in gleicher Weise wie unter A) beschrieben mit PVC-Folie umhüllt.

Es wurden die in der nachfolgenden Tabelle wiedergegebenen Ergebnisse erhalten:

| Probe | **Methode A)-Dämmplatten** | | | **Methode B)-Dämmplatten** | | |
|---|---|---|---|---|---|---|
| | R₁₀ (m²_{*}K/W) | λ (W/mK) | Dichte (kg/m³) | R₁₀ (m²_{*}K/W) | λ (W/mK) | Dichte (kg/m³) |
| Erfindg. | 1,1009 | 26,07 | 139 | 1,0753 | 26,69 | 141 |
| Vgl. 1 | 0,3977 | 70,91 | 314 | 0,3886 | 72,05 | 323 |
| Vgl. 2 | 0,4723 | 56,53 | 214 | 0,4705 | 58,02 | 211 |

Mit den erfindungsgemäßen Dämmplatten gelang die Klassifizierung in die Brandklasse C gemäß DIN EN 13501:2010-01, ermittelt nach dem Prüfverfahren gemäß EN 13823:2010-12.

Die in der vorstehenden Beschreibung sowie in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Beschichtungsmasse, enthaltend
a) mindestens ein organisches Bindemittel auf Dispersionsbasis,
b) eine Menge an Aerogel-Partikeln mit hydrophober oder hydrophobierter Oberfläche und
c) Wasser sowie
d) gegebenenfalls mindestens ein Additiv und/oder
e) gegebenenfalls mindestens ein Brandschutzmittel.

2. Beschichtungsmasse nach Anspruch 1, ferner enthaltend
f) mindestens einen Leichtfüllstoff, insbesondere mineralischen Leichtfüllstoff, der kein Aerogel-Partikel mit hydrophober oder hydrophobierter Oberfläche ist, und/oder
g) mindestens einen Füllstoff, der kein Leichtfüllstoff und kein Aerogel-Partikel mit hydrophober oder hydrophobierter Oberfläche ist, und/oder
h) mindestens ein Fasermaterial, insbesondere Schnittfasermaterial.

3. Beschichtungsmasse nach Anspruch 1 oder 2, **dadurch gekennzeichnet, dass** die Menge an Aerogel-Partikeln mit hydrophober oder hydrophobierter Oberfläche eine Partikelgröße D50 größer oder gleich 0,1 mm, vorzugsweise im Bereich von 0,2 mm bis 5 mm und besonders bevorzugt im Bereich von 0,2 bis 4 mm und/oder eine Partikelgröße D10 größer oder gleich 0,05 mm, vorzugsweise im Bereich von 0,075 mm bis 1 mm und besonders bevorzugt im Bereich von 0,1 bis 0,75 mm und/oder
eine Partikelgröße D90 kleiner oder gleich 10 mm, vorzugsweise im Bereich von 0,4 mm bis 7 mm und besonders bevorzugt im Bereich von 0,5 bis 5 mm aufweisen.

4. Beschichtungsmasse nach einem der vorangehenden Ansprüche, enthalten mindestens 5 Gew.-%, vorzugsweise mindestens 9 Gew.-% und besonders bevorzugt mindestens 11 Gew.-% sowie ganz besonders bevorzugt im Bereich von 12 bis 17 Gew.-% an den Aerogel-Partikeln mit hydrophober oder hydrophobierter Oberfläche, bezogen auf das Gesamtgewicht der Beschichtungsmasse.

5. Beschichtungsmasse nach einem der vorangehenden Ansprüche, **dadurch gekennzeichnet, dass**
die Aerogel-Partikel über eine Dichte kleiner 400 kg/m³, vorzugsweise kleiner 200 kg/m³ und besonders bevorzugt im Bereich von 115 bis 185 kg/m³ und/oder über eine Schüttdichte kleiner oder gleich 150 kg/m³, bevorzugt im Bereich von 60 bis 130 kg/m³ und besonders bevorzugt im Bereich von 65 bis 115 kg/m³, verfügen.

6. Beschichtungsmasse nach einem der vorangehenden Ansprüche, **dadurch gekennzeichnet, dass**
das organische Bindemittel auf Dispersionsbasis mindestens ein Copolymer auf Basis von Vinylacetat und Ethylen, insbesondere ein Vinylacetat/Ethylen-Copolymer, mindestens ein Copolymer auf Basis von Vinylaromaten, insbesondere Styrolacrylat-Copolymere, mindestens ein Copolymer auf Basis von Reinacrylaten, mindestens ein Polyurethan, mindestens ein Silikon, mindestens ein Hybridpolymer auf Basis von amorphem Siliciumdioxid, insbesondere auf der Basis von amorphem Siliciumdioxid und mindestens einem Homo- oder Copolymeren aus Acrylaten und/oder Methacrylaten, oder eine Mischung der genannten Verbindungen enthält oder hieraus als Hauptfeststoffbestandteil gebildet ist, wobei Copolymere auf Basis von Vinylacetat und Ethylen, insbesondere Vinylacetat/Ethylen-Copolymere, Styrolacrylat-Copolymere und/oder Copolymere auf Basis von Reinacrylaten bevorzugt sind.

7. Beschichtungsmasse nach einem der vorangehenden Ansprüche, **dadurch gekennzeichnet, dass**
die Additive ausgewählt sind aus der Gruppe bestehend aus Verdickern, Netzmitteln, Dispergiermitteln, Entschäumungsmitteln, Hydrophobierungsmitteln, Konservierungsmitteln und deren beliebigen Mischungen und/oder dass das Hydrophobierungsmittel (Komponente d1)) ausgewählt ist aus der Gruppe bestehend aus Oleaten und Stearaten, insbesondere Li-Stearat, und deren Mischungen, und/oder dass
das Entschäumungsmittel (Komponente d2)) ausgewählt ist aus der Gruppe bestehend aus Ethylen- und Propylenoxid, Alkyldiglykoläther-Natriumsalz, Natriumlaurylsulphaten, nichtionischen Tenside, insbesondere Fettalkoholethoxylaten, und deren Mischungen, und/oder dass
das Brandschutzmittel ausgewählt ist aus der Gruppe bestehend aus Phosphaten, Al(OH)₃ und deren Mischung.

8. Beschichtungsmasse nach einem der Ansprüche 2 bis 7, **dadurch gekennzeichnet, dass**
die Leichtfüllstoffe ausgewählt sind aus der Gruppe bestehend aus Glasbubbles, Blähglas, z.B. Blähglasgranulat; geblähten vulkanischen Gesteinen, insbesondere Perlite; expandierten Perliten; Blähton; Blähschiefer; Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten; Korkpartikeln und beliebigen Mischungen der genannten zusätzlichen Leichtfüllstoffe, und/oder dass der mindestens eine Füllstoff ausgewählt sind aus der Gruppe bestehend aus Kaolin, Calciumcarbonat, Dolomit, Ton, Kreide, Talkum, Glimmer, Quarzmehl, Quarzsand und beliebigen Mischungen der genannten zusätzlichen Füllstoffe.

9. Beschichtungsmasse nach einem der Ansprüche 2 bis 8, **dadurch gekennzeichnet, dass**
die Leichtfüllstoffe eine Dichte kleiner oder gleich 600 g/l, insbesondere kleiner oder gleich 500 g/l, aufweisen sowie besonders bevorzugt im Bereich von 50 bis 500 g/l, und/oder dass die Leichtfüllstoffe über einen gemittelten Partikeldurchmesser (d50-Wert) im Bereich von 1 µm bis 500 µm, bevorzugt im Bereich von 5 µm bis 300 µm und besonders bevorzugt im Bereich von 10 µm bis 200 µm verfügen.

10. Beschichtungsmasse nach einem der Ansprüche 2 bis 9, **dadurch gekennzeichnet, dass**
der Leichtfüllstoff und/oder der Füllstoff, insbesondere der Leichtfüllstoff und der Füllstoff, einen D50-Wert und/oder einen D90-Wert, insbesondere einen D50-Wert und einen D90-Wert, aufweisen, der kleiner ist als der D50-Wert bzw. der D90-Wert der Aerogel-Partikel mit hydrophober oder hydrophobierter Oberfläche.

11. Beschichtungsmasse nach einem der vorangehenden Ansprüche, enthaltend 1 bis 20 Gew.-%, bevorzugt 1 bis 15 Gew.-%, besonders bevorzugt 2 bis 12 Gew.-% an dem mindestens einen organischen Bindemittel (Feststoffanteil),
1 bis 20 Gew.-%, vorzugsweise 8 bis 18 Gew.-% und besonders bevorzugt 10 bis 17,5 Gew.-% an Aerogel-Partikeln mit hydrophober oder hydrophobierter Oberfläche,
10 bis 75 Gew.-%, bevorzugt 30 bis 70 Gew.-% und besonders bevorzugt 40 bis 65 Gew.-%, Wasser,
0 bis 5 Gew.-%, bevorzugt 0,2 bis 4 Gew.-% und besonders bevorzugt 1 bis 3 Gew.-%, an dem mindestens einen Additiv,
0 bis 10 Gew.-%, vorzugsweise 1 bis 8 Gew.-% und besonders bevorzugt 2 bis 7 Gew.-%, an dem mindestens einen Brandschutzmittel,
0 bis 30 Gew.-%, vorzugsweise 0,1 bis 25 Gew.-% und besonders bevorzugt 1 bis 15 Gew.-% an dem mindestens einen Leichtfüllstoff, der kein Aerogel-Partikel mit Fubär oder hydrophobierter Oberfläche ist,
0 bis 40 Gew.-%, bevorzugt 5 bis 30 Gew.-% und besonders bevorzugt 10 bis 25 Gew.-%, an dem mindestens einen Füllstoff, der kein Leichtfüllstoff und kein Aerogel-Partikel mit hydrophober oder hydrophobierter Oberfläche ist, und
0 bis 5 Gew.-%, bevorzugt 0,1 bis 4 Gew.-% und besonders bevorzugt 0,5 bis 3 Gew.-%, an dem mindestens einen Fasermaterial,
wobei die die Beschichtungsmasse bildenden Komponenten stets 100 Gew.-% ergeben.

12. Beschichtungsmasse nach einem der vorangehenden Ansprüche, **dadurch gekennzeichnet, dass**
diese eine Dichte kleiner oder gleich 0,60 g/ml, bevorzugt kleiner 0,50 g/ml und besonders bevorzugt kleiner oder gleich 0,40 g/ml, aufweist.

13. Beschichtungsmasse nach einem der vorangehenden Ansprüche, **dadurch gekennzeichnet, dass**
diese eine im Wesentlichen gebrauchsfertige pastöse Beschichtungsmasse darstellt.

14. Putzbeschichtung, insbesondere Wärmedämmputzbeschichtung, oder dämmendes Bauteil, insbesondere Wärmedämmplatte, erhältlich oder erhalten aus der Beschichtungsmasse nach einem der vorangehenden Ansprüche.

15. Putzbeschichtung oder Bauteil nach Anspruch 14, **dadurch gekennzeichnet, dass** diese eine Wärmeleitzahl λ gemäß DIN EN 12667:2001 kleiner 0,040 W/mK, bevorzugt im Bereich von 0,021 bis 0,030 W/mK, und besonders bevorzugt im Bereich von 0,023 bis 0,028 W/mK, und/oder
eine Haftzugfestigkeit gemäß DIN EN 13494:2002 im Bereich von 1 bis 160 kPa (DIN 13494), bevorzugt im Bereich von 20 bis 100 kPa und besonders bevorzugt im Bereich von 30 bis 60 kPa, und/oder
eine Querhaftzugfestigkeit im Bereich von 4 bis 40 kPa, bevorzugt im Bereich von 20 bis 40 kPa und besonders bevorzugt im Bereich von 30 bis 40 kPa, und/oder einen Wärmedurchgangswiderstand (bei 10 °C) R₁₀ gemäß DIN EN 12667:2001 größer oder gleich 0,5 m²_{*}K/W, bevorzugt größer oder gleich 0,8 m²_{*}K/W und besonders bevorzugt größer oder gleich 1,0 m²_{*}K/W und/oder eine Brandklasse gemäß DIN EN 13501:2010-10 von mindestens Brandklasse C ermittelt nach dem Prüfverfahren EN 13823:2010-12, und/oder eine Dichte kleiner oder gleich 200 kg/m³, bevorzugt kleiner oder gleich 175 g/m³ und besonders kleiner oder gleich 150 g/m³, aufweist.

16. Gebäudekomponente, umfassend
mindestens einen mineralischen Baukörper, insbesondere ein Betonelement, mit mindestens einer beschichtbaren Fläche, insbesondere ausgewählt aus der Gruppe bestehend aus Wand, insbesondere Betonwand, Decke, insbesondere Betondecke, Sockel, insbesondere Betonsockel, und Boden, insbesondere Betonboden, und auf der beschichtbaren Fläche mindestens abschnittsweise, insbesondere unmittelbar, angebracht oder vorliegend mindestens eine Putzbeschichtung oder mindestens ein Bauteil nach Anspruch 14 oder 15.

17. Gebäudekomponente nach Anspruch 16, ferner umfassend
auf der Putzbeschichtung angebracht oder vorliegend, abgewandt von dem mineralischen Baukörper, insbesondere dem Betonelement, mindestens eine elektrisch beheizbare oder beheizte Beschichtung, insbesondere enthaltend Carbonfasern oder eine Carbonfaserbeschichtung, und/oder mindestens einen Oberputz und/oder mindestens eine Farbbeschichtung.

18. Gebäudekomponente nach Anspruch 16 oder 17, ferner umfassend
ein Gebäudeelement mit einer beschichtbaren Fläche und mit einer Wärmeleitfähigkeit, die geringer ist als die Wärmeleitfähigkeit des mineralischen Baukörpers, insbesondere des Betonelements, insbesondere ausgewählt aus der Gruppe bestehend aus Gipskartonwänden, Kalksandsteinwänden, Tonziegelwänden und dergleichen, wobei auf der beschichtbaren Fläche des mineralischen Baukörpers, insbesondere des Betonelements, und der beschichtbaren Fläche des Gebäudeelements jeweils mindestens abschnittsweise mindestens eine Putzbeschichtung oder mindestens ein Bauteil nach einem der Ansprüche 14 oder 15 angebracht ist oder vorliegt.

19. Gebäudekomponente nach einem der Ansprüche 16 bis 18, **dadurch gekennzeichnet, dass**
das Gebäudeelement und der mineralischen Baukörper, insbesondere das Betonelement, mindestens abschnittsweise aneinander anliegen oder mindestens abschnittsweise über mindestens eine Putzbeschichtung oder mindestens ein Bauteil nach einem der Ansprüche 14 oder 15 miteinander verbunden sind.

20. Gebäudekomponente nach einem der Ansprüche 16 bis 19, **dadurch gekennzeichnet, dass**
der mineralische Baukörper, insbesondere das Betonelement, Carbonbeton und/oder mindestens ein Carbonvlies umfasst oder hieraus besteht.

21. Verwendung der Beschichtungsmasse nach einem der Ansprüche 1 bis 13 für die Herstellung von Wärmedämmputzen oder von dämmenden Bauteilen, insbesondere von Wärmedämmplatten.
